# EUROPEAN PATENT APPLICATION

(11) **EP 4 484 001 A1**
(43) Date of publication of application: **01.01.2025**
(21) Application number: 23759656.4
(22) Date of filing: 06.02.2023
(51) Int. Cl.: B01J 20/26, B01D 53/04, B01D 53/047, B01J 20/28, B01J 20/34, C08L 21/00

(54) **CO2 ADSORBENT AND CO2 SEPARATION-COLLECTION METHOD USING SAME**

(30) Priority: 22.02.2022 JP 2022025649
(71) Applicant: National Institute for Materials Science, Tsukuba-shi, Ibaraki 305-0047 (JP)
(72) Inventor: ICHINOSE Izumi, Tsukuba-shi, Ibaraki 305-0047 (JP); BIN ISMAIL Edhuan, Tsukuba-shi, Ibaraki 305-0047 (JP); INOUE Mizuki, Tsukuba-shi, Ibaraki 305-0047 (JP)
(74) Representative: Dehns
(86) International application number: PCT/JP2023/003823
(87) International publication number: WO 2023/162652

(57) **Abstract**

A CO₂ adsorbent comprising of rubber having a glass transition temperature of - 150°C or more and -10°C or less, an SP value of 7 (cal/cm³) ^{0.5} or more and 10.5 (cal/cm³) ^{0.5} or less, and an elastic modulus at 25°C of 0.03 MPa or more and 5 MPa or less.

## Description

### Technical Field

The present invention relates to a CO₂ adsorbent and a CO₂ separation and recovery method using the same.

### Background Art

In order to prevent global warming, separation and recovery of carbon dioxide gas (CO₂) is an extremely important issue. However, CO₂ separation and recovery methods and their conditions vary greatly depending on the source and concentration of CO₂, as described below.

In exhaust gas after air combustion, such as boiler exhaust gas, the CO₂ concentration is usually 15 wt% or less. In such cases, CO₂ recovery is generally performed using strong adsorbent such as amine adsorbent. For example, such adsorbent is disclosed in Patent Documents 1 to 4, and such CO₂ recovery is disclosed in Patent Document 5.

Strong adsorbent generally requires large amounts of thermal energy when desorbing CO₂. However, if the CO₂ concentration in the mixed gas is low and CO₂ can be separated with a small amount of adsorbent, this energy problem is less. Therefore, when CO₂ concentrations are low, it is effective to separate CO₂ using small amount of strong adsorbent. For example, the strong adsorbent is effective when removing CO₂ from a gas mixture to produce gas products.

On the other hand, from the perspective of greenhouse gas separation, separation and recovery of low-concentration CO₂ is not very efficient. This is because the desorption energy is large relative to the amount of CO₂ separated.

From the perspective of reducing greenhouse gas emissions, which also takes desorption energy efficiency into consideration, there is a strong desire to separate and recover CO₂ with low energy from high-concentration CO₂ sources such as natural gas and associated gas separation processes.

This natural gas and associated gas separation process can be classified as follows depending on the CO₂ concentration.

### (1) When the CO₂ concentration is 2% or less

In this case, there is no need to separate CO2, because if the CO2 concentration is less than 2%, there is no possibility of clogging even in polar pipelines. However, when producing liquefied natural gas (LNG), the Acid Gas Removal (AGR) process is applied before the cryogenic separation method is applied.

### (2) When the CO₂ concentration is around 30%

Older equipment used molten potassium carbonate, but this is being replaced by AGR processes using amine solvents. The adsorption properties of amine solvents are regenerated by heat. Therefore, when an amine solvent is used, maintenance of the equipment is easy. On the other hand, when molten potassium carbonate is used, the problem of corrosion of steel often arises.

### (3) When the CO₂ concentration is 30-60%

An organic solvent such as propylene carbonate (PC) is used as the adsorbent. If the CO₂ concentration is high, a large amount of thermal energy is required to regenerate the amine solvent. Therefore, the AGR process cannot be used.

### (4) When the CO₂ concentration is 70% or more

Currently, it is difficult to develop a separation process. There are high expectations for new CO2 separation technology.

### Citation List

### Patent Literature

Patent Literature 1 : JP2021-3664
Patent Literature 2 : JP2020-58967
Patent Literature 3 : JP2020-69417
Patent Literature 4 : JP2019-147099
Patent Literature 5 : JP2021-171744

### Summary of Invention

### Technical Problem

Under these circumstances, there is a need to separate CO₂, which is contained in natural gas by 30% or more, to reduce the CO₂ concentration to 2% or less. In addition to natural gas, mixed gases containing high concentrations of CO₂ are also generated at thermal power plants and biogas production. There is a desire for a technology to recover high-concentration CO₂ at low cost.

The method of recovering CO₂ using an organic solvent as an adsorbent requires the mixed gas to be dissolved into high-pressure microbubbles. Therefore, there is a problem in that energy loss is large and a part of the organic solvent is volatilized, so that the cost of recovering the organic solvent is also required.

In view of the above background, the object of the present invention is to provide a CO₂ adsorbent suitable for recovering CO₂ from a mixed gas containing a high concentration of CO₂, and a CO₂ separation and recovery method using the same.

### Solution to Problem

The features of the present invention for solving the problems are shown below.

### (Feature 1)

A CO₂ adsorbent comprising rubber having a glass transition temperature of -150°C or more and -10°C or less, an SP value of 7 (cal/cm³) ^{0.5} or more and 10.5 (cal/cm³) ^{0.5} or less, and an elastic modulus at 25°C of 0.03 MPa or more and 5 MPa or less.

### (Feature 2)

The CO₂ adsorbent according to the feature 1, wherein the glass transition temperature of the rubber is -125°C or more and -20°C or less.

### (Feature 3)

The CO₂ adsorbent according to the feature 1 or 2, wherein the SP value of the rubber is 7.3 (cal/cm³) ^{0.5} or more and 7.6 (cal/cm³) ^{0.5} or less.

### (Feature 4)

The CO₂ adsorbent according to any one of the features 1 to 3, wherein the elastic modulus of the rubber at 25°C is 0.1 MPa or more and 4.5 MPa or less.

### (Feature 5)

The CO₂ adsorbent according to any one of the features 1 to 4, wherein the rubber is made of PDMS.

### (Feature 6)

The CO₂ adsorbent according to any one of the features 1 to 5, wherein a thickness of the rubber is 0.1 mm or more and 5 mm or less.

### (Feature 7)

The CO₂ adsorbent according to any one of the features 1 to 5, wherein the rubber is in a powder form with an equivalent spherical diameter of 0.002 mm or more and 0.1 mm or less,

### (Feature 8)

A method for separating and recovering CO₂ from a mixed gas, comprising:
Bringing a mixed gas containing CO₂, under a pressure of 1 MPa to 10 MPa and at a subzero temperature, into contact with the rubber according to any one of claims 1 to 7; and
After bringing the mixed gas into contact with the rubber, isolating the rubber from the mixed gas, and then desorbing CO₂ from the rubber in an environment with a pressure lower than the pressure at which the mixed gas was brought into contact with the rubber, and within the range of 0.1 MPa to 5 MPa.

### Advantageous Effects of Invention

According to the present invention, a CO₂ adsorbent suitable for recovering CO₂ from a mixed gas containing a high concentration of CO₂ and a CO₂ separation and recovery method using the same are provided.

As a result, the present invention reduces the energy cost required for CO₂ recovery. In particular, the cost of regenerating the adsorbent is reduced, making it possible to contribute to the reduction of greenhouse gas emissions.

### Brief Description of Drawings

FIG. 1 is a flowchart showing the CO₂ separation and recovery method of the present invention.
FIG. 2 is a characteristic diagram showing the CO₂ adsorption characteristics of PDMS rubber.
FIG. 3 is a characteristic diagram showing the temperature and pressure dependence of the amount of CO₂ adsorbed by fluoro-rubber.
FIG. 4 is a characteristic diagram showing the temperature and pressure dependence (adsorption isotherm) of the amount of CO₂ adsorbed by PDMS rubber.
FIG. 5 is a characteristic diagram showing the temperature and pressure dependence (adsorption isotherm) of the amount of CO₂ adsorbed by PDMS rubber.
FIG. 6 is a characteristic diagram showing the CO₂ adsorption isotherm of rubber at -78°C.
FIG. 7 is a characteristic diagram showing a CO₂ adsorption isotherm of NBR at - 78°C.
FIG. 8 is a characteristic diagram showing the CO₂ adsorption isotherm of activated carbon (WH5C) at -78°C.

### Description of Embodiments

Hereinafter, embodiments for carrying out the present invention will be described with reference to the drawings. The expressions A to B that appear in a sentence indicate A or more and B or less.

### (Embodiment 1)

In Embodiment 1, a CO₂ adsorbent made of rubber whose glass transition temperature, SP value (Solubility Parameter), and elastic modulus are numerically specified will be described.

Here, "rubber" refers to a polymer that exhibits entropic elasticity at room temperature.

The adsorption power of rubber for CO₂ is generally not necessarily large, and high pressure is required to adsorb CO₂ at room temperature.

However, the inventors of the present invention discovered the followings through extensive experiments.

The rubber with a low glass transition temperature can adsorb and desorb CO₂ at freezing temperatures, where its vapor pressure is low. This rubber can adsorb 20 wt% or more of CO₂ at relatively low pressure.

Additionally, in order to efficiently adsorb a large amount of CO₂, the SP value and elastic modulus of the rubber need to be within a predetermined range.

Rubber in embodiment 1 has a glass transition temperature of -150°C or higher and -10°C or lower, an SP value of 7.0 (cal/cm³)^{0.5} or higher and 10.5 (cal/cm³)^{0.5} or lower, and an elastic modulus at 25°C of 0.03 MPa or higher and 5 MPa or lower.

When the glass transition temperature of the rubber is in the range of -150°C or higher and -10°C or lower, more preferably -125°C or higher and -20°C or lower, the volume elastic modulus of the rubber during CO₂ adsorption becomes small. This allows the rubber to absorb a large amount of CO₂ even at low temperatures, such as below the freezing point of water.

The volume elastic modulus of rubber is proportional to the elastic modulus (usually tensile elastic modulus) if the Poisson's ratio remains constant. The glass transition temperature of rubber refers to the phenomenon where the elastic modulus sharply increases when the temperature is lowered. At temperatures above the glass transition temperature, rubber becomes softer and is more likely to adsorb CO₂. If the glass transition temperature is below -20°C, the partial pressure of CO₂ becomes moderately small, making it more preferable for the absorption of a large amount of CO₂. However, regardless of the type of rubber, the elastic modulus increases significantly at very low temperatures, so temperatures above -125°C are more preferable.

The SP value of the rubber is 7.0 (cal/cm³) ^{0.5} or more and 10.5 (cal/cm³) ^{0.5} or less, more preferably 7.3 (cal/cm³) ^{0.5} or more and 7.6 (cal/cm³) ^{0.5} or less. When the SP value of the rubber is within this range, the affinity of the rubber for CO₂ increases and a large amount of CO₂ can be adsorbed within the rubber. The reason why the SP value is set to 7.3 (cal/cm³) ^{0.5} or more and 7.6 (cal/cm³) ^{0.5} or less as a more preferable condition is as follows. The SP value near the critical point of CO₂ is 3.9 (cal/cm³)^{0.5}. On the other hand, at around 0°C and 5 atm, it is 7.3 (cal/cm³) ^{0.5}, and at -10°C and around 3 atm, it increases to 7.6 (cal/cm³) ^{0.5}. The SP value of CO₂ is 8.8 (cal/cm³)^{0.5} at -40°C, and increases to around 9.4 (cal/cm³)^{0.5} at temperatures below this temperature. However, below -56.6°C, it loses its properties as a liquid, so the SP value cannot be defined. The SP value of CO₂ increases as the temperature decreases, but it also increases as the pressure increases. For example, even at -30°C, at 50 atmospheres, the SP value of CO₂ is 8.5 (cal/cm³)^{0.5}. In the CO₂ separation and recovery method of the present invention, it is necessary to adsorb CO₂ at sub-zero temperatures and high pressure. Therefore, it is desirable for the SP value of the rubber to be close to the SP value of CO₂ under these conditions. However, in the present invention, the preferred range of SP values is indicated for the value at 25°C. This is because data on the SP values of rubber at sub-zero temperatures are not necessarily comprehensive. Additionally, like CO₂, the SP value of rubber also increases with decreasing temperature.

A soft rubber whose elastic modulus is in the range of 0.03 MPa or more and 5 MPa or less, more preferably 0.1 MPa or more and 4.5 MPa or less at 25° C., easily expands in volume when CO₂ is adsorbed. This allows a large amount of CO₂ to be adsorbed within the rubber. This flexibility at room temperature of 25°C makes rubber highly useful as a CO₂ adsorbent.

From the above characteristics, the rubber of Embodiment 1 is a CO₂ adsorbent suitable for recovering CO₂ from a mixed gas containing a high concentration of CO₂.

The rubber of Embodiment 1 is a CO₂ adsorbent suitable for adsorbing CO₂ from a high-pressure mixed gas and desorbing it by reducing the pressure to recover CO₂. Furthermore, it is a CO₂ adsorbent suitable for increasing recovery efficiency by adsorbing CO₂ from a mixed gas at low temperatures and desorbing it under reduced pressure to recover CO₂.

Examples of the rubber that satisfies the above conditions include one or more selected from fluorine-based rubber, polysiloxane-based rubber, butyl rubber, natural rubber, silicone, and the like. Among these rubbers, polysiloxane rubbers can be particularly preferably used. As the polysiloxane, for example, dimethylpolysiloxane (PDMS) and diethylpolysiloxane are used. In particular, a soft PDMS rubber with a low elastic modulus can perform extremely high CO₂ adsorption at low temperatures around -80°C, where the vapor pressure of CO₂ approaches atmospheric pressure, as shown in the examples.

As dimethylpolysiloxane, one in which a methyl group is partially substituted by other reactive groups (e.g. phenyl, ethyl or vinyl groups) may be used. Similarly, as diethylpolysiloxane, one in which a portion of the ethyl group is substituted by other reactive groups (e.g., phenyl, methyl, or vinyl groups) may be used. One type of polysiloxane may be used, or a combination of multiple types may be used.

From the viewpoint of further increasing the adsorption amount of CO₂ at low temperatures, it is preferable that the rubber contains a certain amount of diethyl. For example, PDMS (dimethylpolysiloxane) in which some of the reactive groups are substituted with ethyl may be used. Further, by using PDMS and diethylpolysiloxane together, the rubber may contain a certain amount of diethyl.

The rubber with an SP value of 10.5 (cal/cm³)^{0.5} or less are generally hydrophobic, but some of them tend to adsorb water. In such cases, by making the rubber hydrophobic, it is possible to adsorb a large amount of CO₂ at sub-zero temperatures. At subzero temperatures, water tends to adsorb to the rubber interface and voids, and adsorption performance decreases if a small amount of water is mixed in. However, by adsorbing hydrophobic molecules such as decane to the rubber, water adsorption can be suppressed. This makes it easier for the rubber to maintain a high adsorption power for CO₂. The contact angle of water on the surface of the rubber (adsorbent) may be 80° or more and 150° or less.

Further, when the rubber is in powder form, the surface area increases and CO₂ can be adsorbed quickly.

When the rubber is in powder form, the average particle diameter (equivalent sphere diameter) of the rubber is, for example, 0.5 mm or less, and preferably 0.1 mm or less, from the viewpoint of CO₂ adsorption rate and desorption rate. The lower limit of the average particle diameter of the rubber is, for example, 0.002 mm or more, preferably 0.01 mm or more. In particular, a polysiloxane rubber such as PDMS, which is powdered to have the average particle diameter as described above, can be preferably used. The average particle diameter of the rubber is the average equivalent sphere diameter observed by microscopy using a TEM or SEM. If the powdered rubber is placed in a suitable cloth bag (for example, a nylon cloth bag) and used as an adsorbent, handling becomes easier. In this case, the rubber having an equivalent sphere diameter of 0.001 mm or more can be used. For example, when using the powdered rubber in a cloth bag woven from twisted fibers with a fiber diameter of about 0.03 mm, there is no problem as the adsorbent even if the average particle diameter of the rubber is about 0.002 mm.

The shape of the rubber is not limited to powder, and may be, for example, a thick plate, an angular shape, or a pellet. The CO₂ adsorbed by the rubber is desorbed from the vicinity of the surface layer of the rubber at a diffusion-controlled rate. In rubber, CO₂ is desorbed at a high speed in a portion at a depth of 2.5 mm or less from the surface layer (that is, a portion within 2.5 mm from the surface layer). Therefore, from the viewpoint of high-speed CO₂ desorption, the thickness of the rubber is preferably 5 mm or less. The lower limit of the thickness of the rubber is not particularly limited, but from the viewpoint of ease of handling and stability of quality, it is preferably 0.1 mm or more. For example, if the rubber is rectangular in shape and can be conceived of in the vertical, horizontal, and height directions, "rubber thickness" represents the shortest of the length in the vertical direction, length in the horizontal direction, and length in the height direction.

Conventional CO₂ separation technology that uses organic solvents such as propylene carbonate (PC) as adsorbent (absorbent) requires the gas mixture to be dissolved in high-pressure microbubbles. Therefore, such conventional CO₂ separation technology has a large energy loss. Furthermore, since a part of the organic solvent evaporates, the cost of recovering the organic solvent is also incurred.

In contrast, in the CO₂ separation method using rubber according to the first embodiment of the present invention, the rubber is solid and easy to handle. Furthermore, this CO₂ separation method has the advantage that loss of adsorbent is small, the amount of CO₂ adsorbed is large, and the device can be made smaller. Further, when the rubber is powder, the specific surface area is large and the rate of adsorption and desorption of CO₂ increases.

### (Embodiment 2)

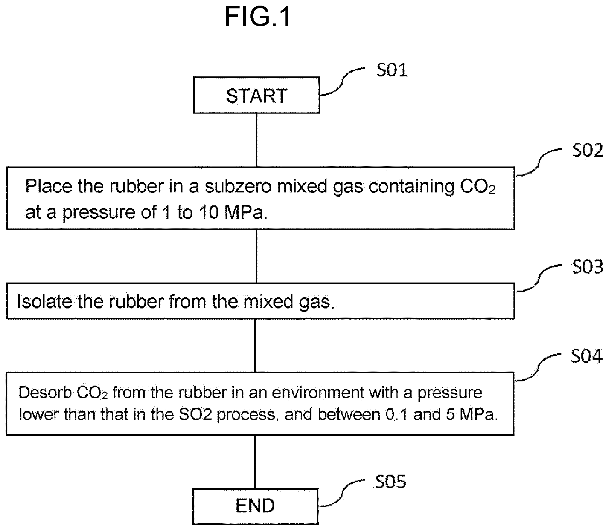

In embodiment 2, a method for separating and recovering CO₂ using the rubber of embodiment 1 will be described with reference to Figure 1. Figure 1 shows a flow chart of an example of a method for separating and recovering CO₂.

The CO₂ separation and recovery method of Embodiment 2 is a method for separating and recovering CO₂ that includes the following steps.

A mixed gas contact step (Step S02) in which the rubber of Embodiment 1 is placed in a mixed gas containing CO₂, where the pressure is between 1 MPa and 10 MPa and the temperature is below freezing. A mixed gas isolation step (Step S03) in which the rubber is isolated from the mixed gas after the mixed gas contact step. A desorption step (Step S04) in which CO₂ is desorbed from the rubber in an environment where the pressure is lower than the pressure in the mixed gas contact step and is between 0.1 MPa and 5 MPa.

The mixed gas contact step involves supplying the mixed gas to the rubber placed within a containment vessel (e.g., an adsorption tower), thereby bringing the mixed gas into contact with the rubber. The mixed gas is supplied to the containment vessel under a pressure of between 1 MPa and 10 MPa and at a temperature below freezing. During the gas contact step, CO₂ is adsorbed onto the rubber. The temperature of the mixed gas is, for example, between -50°C and 0°C, preferably between -40°C and -30°C. The mixed gas contact step is carried out for a duration sufficient for CO₂ to be adequately adsorbed onto the rubber (e.g., between 5 minutes and 2 hours).

In the mixed gas isolation step, the supply of the mixed gas to the containment vessel is stopped.

In the desorption step, for example, by opening the pressure reducing valve, the pressure inside the containment vessel is adjusted to be lower than the pressure in the mixed gas contact step and to be between 0.1MPa and 5MPa. As the pressure inside the containment vessel decreases, CO₂ desorbs from the rubber. The desorption step is carried out over a period (e.g., 1 minute to 1 hour) sufficient for CO₂ to desorb from the rubber.

The CO₂ concentration in the mixed gas used in the CO₂ separation and recovery method of the present invention is, for example, 20-70 vol%.

The CO₂ separation and recovery method using the solid rubber adsorbent of the present invention has a fast adsorption rate, a high adsorption capacity, and does not cause evaporation of the adsorbent during desorption. Therefore, the method of the present invention does not require recovery of the adsorbent. Thus, the method of the present invention is highly advantageous compared to methods that use organic solvents such as PC to remove CO₂ from natural gas containing high concentrations of CO₂.

When removing CO₂ from natural gas, the primary pressure of the produced gas is extremely high, making it easy to cool by heat exchange and decompression. By supplying such low-temperature mixed gas to a container (adsorption tower) equipped with the CO₂ adsorbent of the present invention, CO₂ can be separated. Additionally, the separated CO₂ can be easily recovered.

In the production of biogas, the mixed gas is currently pressurized to about 8 atmospheres, resulting in methane containing 40 wt% CO₂, similar to the situation with natural gas containing high concentrations of CO₂.

To separate CO₂ from methane, water is used as an adsorbent to reduce equipment costs. However, even under 10 atmospheres of pressure, the partial pressure of CO₂ is only 4 atmospheres, and the solubility of CO₂ at room temperature is less than 4%. The dissolution of CO₂ generates carbonic acid, which lowers the pH and poses a corrosion problem.

On the other hand, according to the present invention, CO₂ can be efficiently recovered through pressurization, heat exchange, and cooling. Additionally, the adsorbent of the present invention has a high adsorption capacity, allowing for the miniaturization of the adsorption tower, thus reducing the capital investment required for the removal of large quantities of CO₂.

As understood from the above description, the CO₂ separation and recovery method according to the present invention comprises:
a mixed gas contact step of bringing a mixed gas containing CO₂, with a pressure of 1 MPa to 10 MPa, and at sub-zero temperatures into contact with rubber, and
a desorption step, after the mixed gas contact step, of isolating the rubber from the mixed gas and desorbing CO₂ from the rubber in an environment where the pressure is lower than that of the mixed gas contact step and is between 0.1 MPa and 5 MPa.

### Example

### (Example 1)

In Example 1, the PDMS rubber produced using the PDMS rubber preparation kit was used to evaluate the properties when CO₂ was adsorbed and desorbed.

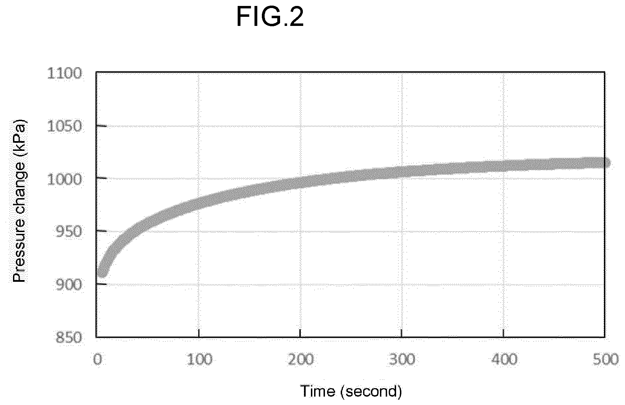

The PDMS rubber preparation kit used was SYLGARDTM 184 Silicone Elastomer manufactured by DOW Inc. The prepared PDMS rubber was cut into 5 mm square pieces. The prepared PDMS rubber had a glass transition temperature of -125°C, an SP value of 7.6 (cal/cm³)^{0.5}, and an elastic modulus of 2.0 MPa at 25°C. After CO₂ was adsorbed into the 5 mm square PDMS rubber at a temperature of 25°C and 30 atm of CO₂, the PDMS rubber was isolated from the high-pressure CO₂ gas. In the following experiments including Example 1, adsorption was performed using a gas with a CO₂ concentration of 100%. After that, the CO₂ adsorbed by the PDMS rubber was leaked into a vacuum container. The pressure change in the sample container at that time is shown in Figure 2. This pressure change includes all the CO₂ in the sample container. In other words, it contains CO₂ that was adsorbed onto the PDMS rubber and CO₂ that was present in the gaps between the PDMS rubber. The change in pressure that occurs a few seconds after the leak is due to an increase in pressure caused by CO₂ being released from the PDMS rubber. These results show that at around 10 atmospheres, more than 80% of the CO₂ is desorbed in about 5 minutes.

In PDMS rubber with an equivalent sphere diameter of 500 µm, desorption of CO₂ occurs within a few seconds. Even in PDMS rubber with a side length of 5 mm (adsorbent thickness of 5 mm), the desorption speed of CO₂ from the surface layer is fast. The CO₂ adsorbed inside is desorbed slightly later than the CO₂ on the surface layer. The results shown in Figure 2 indicate that if the thickness of the adsorbent is 5 mm or less, a sufficient desorption speed (within 5 minutes) for the regeneration of the CO₂ adsorbent can be achieved.

### (Example 2)

In Example 2, the CO₂ adsorption amount of various rubbers at -40°C was evaluated. Three types of samples were used: KMP-598 (PDMS rubber powder manufactured by Shin-Etsu Silicone Co., Ltd., particle size: 2-30 µm), NBR (NBR powder (PN30A) manufactured by JSR Corporation, sphere equivalent diameter: 400 µm), and PDMS-h8 (homemade PDMS rubber powder, average particle size: 130 µm).

PDMS-h8 is a sample obtained by adding 8 g of hexane to 2 g of PDMS macromer during the curing of a two-liquid mixed PDMS rubber preparation kit (SYLGARDTM 184 Silicone Elastomer), followed by curing and drying. The elastic modulus of PDMS-h8 at room temperature (25°C) is 0.04 MPa. This is about 100 times smaller than that of normal PDMS rubber, making PDMS-h8 a soft rubber. The elastic modulus of KMP-598 and NBR at room temperature (25°C) is approximately 4 MPa and approximately 1 MPa, respectively.

The glass transition temperatures of KMP-598, PDMS-h8 and NBR are near -125°C, -110°C and -25°C, respectively, and the SP values are 7.3 (cal/cm³) ^{0.5}, 7.3 (cal/cm³) ^{0.5} and 10.3 (cal/cm³) ^{0.5}.

These rubbers, each weighing 10 grams, were used to adsorb CO₂ at -40°C. Subsequently, the CO₂ was desorbed at room temperature in a vacuum buffer container (1 L). The amount of CO₂ adsorbed by the rubber was calculated based on the pressure increase within the buffer container. The results are shown in Table 1. The pressure in Table 1 represents the absolute pressure of CO₂ during adsorption.

KPM-598 adsorbed 10.9 wt% of CO₂ at 8 atmospheres. The softer PDMS-h8 adsorbed an even greater amount, 12.38 wt% of CO₂. Furthermore, when the pressure for PDMS-h8 was increased to 8.8 atmospheres and 10.0 atmospheres, the CO₂ adsorption increased significantly to 16.15 wt% and 25.20 wt%, respectively.

NBR also adsorbed 21.20 wt% CO₂ at 10 atmospheres.

These results indicate that rubbers with a glass transition temperature below -40°C, an SP value of 7.0 to 10.5 (cal/cm³)⁰.⁵, and an elastic modulus ranging from 0.03 MPa to 5 MPa at 25°C can adsorb more than 10 wt% of CO₂ at low temperatures.

**[Table 1]**

| Item | KMP-598 | PDMS_h8 | | | NBR |
|---|---|---|---|---|---|
| Glass transition temperature(°C ) | -125 | -110 | | | -25 |
| SP value (cal/cm³)^{0.5} | 7.3 | 7.3 | | | 10.3 |
| Pressure (atm) | 8.0 | 8.0 | 8.8 | 10.0 | 10.0 |
| CO₂ adsorption amount (wt%) | 10.90 | 12.38 | 16.15 | 25.20 | 21.20 |

### (Comparative Example 1)

In Comparative Example 1, the amount of CO₂ adsorption at -40°C was measured for NR (rubber powder #2500, sphere equivalent diameter: 400 µm, manufactured by Toyo Rubber Chip Co., Ltd.), a natural rubber powder derived from waste tires. The results are shown in Table 2. The glass transition temperature of the rubber component of this powder sample is around -70°C, and the SP value is about 8.2 (cal/cm3)^{0.5}. The elastic modulus of NR in Comparative Example 1 at 25°C is about 20 MPa.

**[Table 2]**

| Item | NR |
|---|---|
| Glass transition temperature(°C) | -70 |
| SP value (cal/cm³)^{0.5} | 8.2 |
| Pressure (atm) | 9.5 |
| CO₂ adsorption amount (wt%) | 4.09 |

In Comparative Example 1, the CO₂ adsorption amount at an absolute pressure of 9.5 atm was 4.09 wt%. It is considered that natural rubber easily adsorbs CO₂, but the CO₂ adsorption amount is smaller in rubber that has been cured by vulcanization or carbon additives.

The PDMS rubber used in Example 1 has a modulus of elasticity of 42 MPa at - 90°C. The modulus of elasticity of the PDMS rubber used in Example 1 decreases to 27 MPa, 18 MPa, 13 MPa, and 10 MPa at -80°C, -70°C, -60°C, and -50°C, respectively, and the modulus of elasticity is 4.4 MPa at 25°C. When CO₂ is adsorbed, the rubber undergoes volumetric swelling. Therefore, it is easier to adsorb CO₂ when a rubber with a high modulus of elasticity is used and in a temperature range where the modulus of elasticity is high.

### (Example 3)

In Example 3, the temperature dependence of the amount of CO₂ adsorption on fluoro-rubber was evaluated. The sample used was fluoro-rubber powder with an average particle size of 130 µm (Daikin Industries, Ltd. G-701BP, which was ground to a size below 500 µm using a cryogenic grinder).

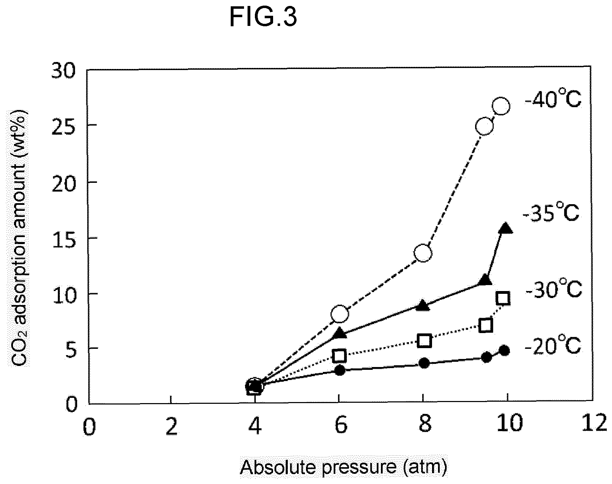

The experimental method followed that of Example 2, with the adsorption temperature varied at -40°C, -35°C, -30°C, and -20°C to measure the amount of CO₂ adsorption. The results are shown in Figure 3 and Table 3. The amount of CO₂ adsorption of the fluoro-rubber in Example 3 exceeded 13.5 wt% at -40°C under an absolute pressure of 8 atmospheres. In contrast, at -35°C, the amount of CO₂ adsorption was 11.1 wt% at 9.5 atmospheres. At -30°C and -20°C, the amount of CO₂ adsorption did not exceed 10 wt% at pressures below 10 atmospheres.

These results indicate that a lower temperature yields a higher amount of CO₂ adsorption, making it desirable for CO₂ separation and recovery.

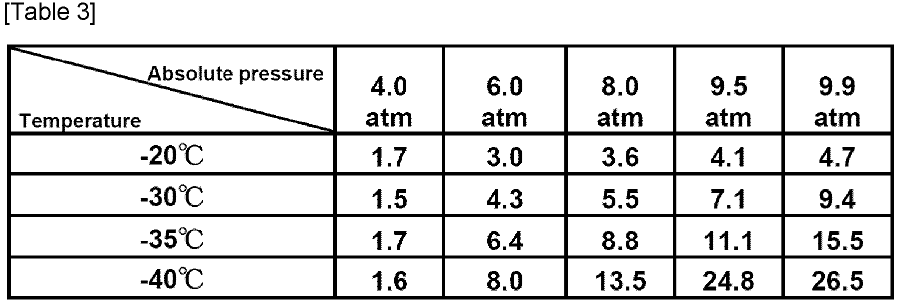

### (Reference Example 1)

In Reference Example 1, the CO₂ adsorption isotherm of PDMS-h8 used in Example 2 was measured.

The measurement device used was a Belsorp max manufactured by Microtrac-Bell.

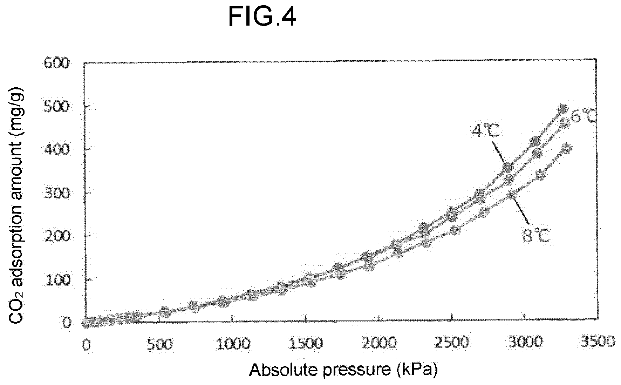

The results are shown in Figure 4.

When the temperature of CO₂ was set at 4°C, 6°C, and 8°C, which are relatively high for CO₂ adsorption, and the absolute pressure of CO₂ was raised to 30 atm or more, the amount of CO₂ adsorption was 30 wt% or more. However, under such conditions, the partial pressure of unabsorbed CO₂ in the mixed gas becomes high. For this reason, CO₂ in the gas phase cannot be adsorbed efficiently. The reason for this is that, for example, when using an adsorbent to reduce the CO₂ concentration from a mixed gas with a CO₂ concentration of 70% to 10% (10% as partial pressure), the total gas pressure needs to be 300 atm, but adsorption operation at such high pressure is not realistic. It is desirable for the adsorbent to achieve a high adsorption amount at a low CO₂ partial pressure, and it is preferable that the adsorption operation can be performed at a low temperature.

### (Example 4)

In Example 4, the CO₂ adsorption isotherm of PDMS-h8 below freezing point, i.e., below 0°C, is shown. The measurement method was the same as in Reference Example 1.

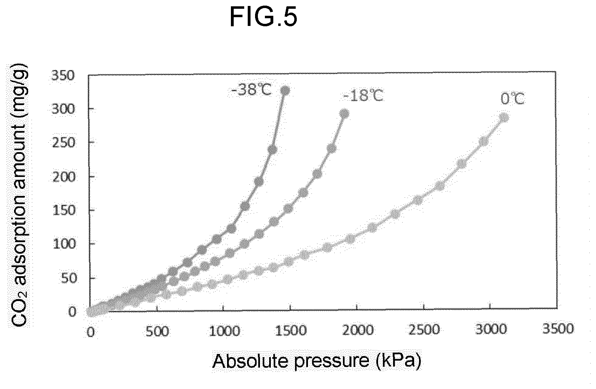

The results are shown in Figure 5. As is clear from Figure 5, below freezing point, a large amount of adsorption was observed even when the CO₂ pressure was low. It shows that below freezing point is desirable for efficient CO₂ adsorption.

For example, at -38°C, CO₂ can be adsorbed at about half the CO₂ pressure compared to 0°C. This shows that the amount of CO₂ remaining in the gas phase when CO₂ is separated and recovered is halved.

### (Example 5)

In Example 5, the CO₂ adsorption isotherm was evaluated at -78°C.

CO₂ has a triple point at 0.52 MPa and -56.6°C. Therefore, CO₂ exhibits different physical properties above and below -56.6°C, even within the sub-zero temperature range.

Around -40°C, CO₂ liquefies under pressure, with the liquefaction pressure being approximately 10 atmospheres.

Conversely, around -80°C, the sublimation pressure is about 1 atmosphere, and when high-concentration CO₂ mixed gas is pressurized, CO₂ solidifies.

Thus, the adsorption operation is performed at approximately one-tenth of the pressure compared to around -40°C. Since the vapor pressure of CO₂ is also lower, the concentration of CO₂ remaining in the gas phase can be reduced.

The samples in Example 5 were the KMP-598 used in Example 2 and a homemade PDMS rubber powder (PDMS_Ph_DIPE). PDMS_Ph_DIPE was prepared as follows.

PDMS (molecular weight: 57,000) with vinyl groups at both ends and polyphenylmethylpolysiloxane (viscosity: 500 cSt) were mixed at a ratio of 1:1 to obtain a mixed solution.
10 wt% of dicumyl peroxide was added to the mixed solution, which was then heated at 150°C for 12 hours and crushed in a cryogenic grinder (average particle size: 130 µm).

PDMS_Ph_DIPE has a glass transition temperature of -120°C, an SP value of 7.6 (cal/cm3) ^{0.5}, and an elastic modulus of 2 MPa at 25°C.

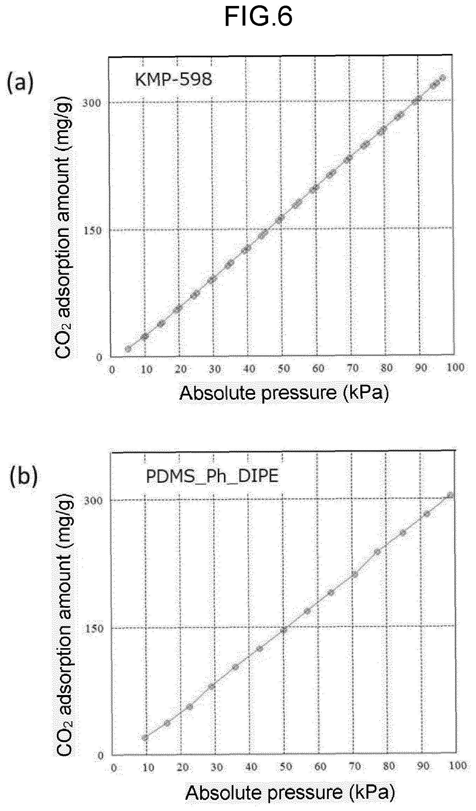

Measurements were performed using a Belsorp Mini manufactured by Microtrack-Bell. The experimental results are shown in Figure 6.

The amount of CO₂ adsorption into KMP-598 was 32 wt% at an absolute pressure of 97 kPa, and PDMS_Ph_DIPE also showed a CO₂ adsorption amount of over 30 wt%. In both cases, the CO₂ adsorption amount at a pressure of 35 kPa exceeded 10 wt%, indicating that the partial pressure of CO2 can be reduced to 0.35 atmospheres or less.

This result means that when CO₂ is adsorbed at 35 atmospheres, the partial pressure of CO₂ can be reduced to 1% or less. It also shows that the amount of CO₂ adsorption changes according to Henry's law, making it easy to desorb by reducing pressure.

### (Example 6)

In Example 6, the CO₂ adsorption isotherm at -78°C for the NBR used in Example 2 was evaluated.

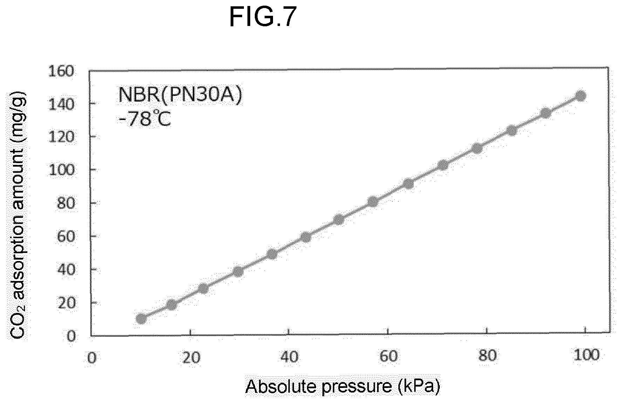

The measurement method was the same as in Example 4. The results are shown in Figure 7.

The adsorption to NBR at a temperature of -78°C was approximately half that of Example 5. This is due to the fact that the glass transition temperature of NBR is around - 35°C, and it hardens at low temperatures.

### (Comparative Example 2)

In Comparative Example 2, the CO₂ adsorption isotherm for activated carbon at - 78°C was evaluated.

The sample used was vacuum-dried activated carbon (Granular Shirasagi WH5C) manufactured by Osaka Gas Chemicals Co., Ltd. The measurement conditions were the same as those in Example 4.

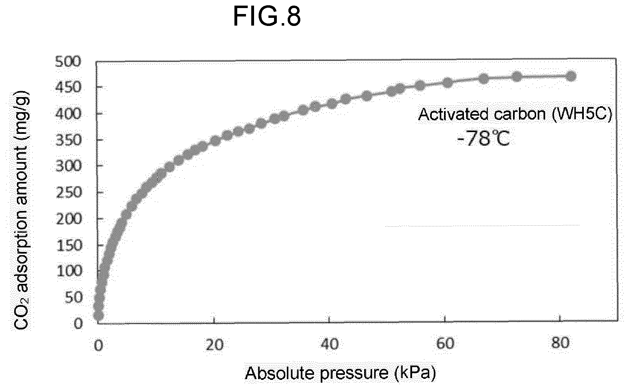

The results are shown in Figure 8.

In the case of activated carbon, a large amount of CO₂ is adsorbed. However, as is clear from the adsorption isotherm, activated carbon has a large adsorption pressure at low pressure, and even under a reduced pressure of -70 kPa (approximately 30 kPa as absolute pressure), 40 wt% of CO₂ is adsorbed on the activated carbon. Further reduction in pressure is required to desorb this. In addition, although vacuum-dried activated carbon was used in the experiment, water is strongly adsorbed into the micropores of activated carbon, so the adsorption performance decreases even with the inclusion of even a small amount of water. On the other hand, such deterioration does not occur with hydrophobic rubber.

### (Example 7)

In Example 7, the CO₂ adsorption isotherm at -96°C was evaluated.

The measurement method was the same as in Example 4, and the following four types of samples were used. The average particle size of all four types was 130µm.
(1) PDMS_h15:
   A sample prepared by adding 15 g of hexane to 2 g of PDMS macromer during the curing of a two-part mixed PDMS rubber preparation kit (SYLGARD^{™} 184 Silicone Elastomer), followed by cryogenic grinding.
(2) PDMS_PDE:
   A sample prepared by adding dicumyl peroxide equivalent to 10 wt% of PDMS (molecular weight: 57,000) with vinyl groups at both ends, heating at 150°C for 12 hours, and then cryogenic grinding.
(3) PDMS_Ph_DIPE:
   The sample described in Example 5.
(4) PDMS_d8:
   A sample prepared by adding 8 g of decane to 2 g of PDMS macromer during the curing of a two-part mixed PDMS rubber preparation kit (SYLGARD^{™} 184 Silicone Elastomer), washing with hexane, drying, and then cryogenic grinding.

The measurement results are shown in Table 4. The SP values of the samples used in Example 7 were in the range of 7.3 (cal/cm³)^{0.5} or more and 7.6 (cal/cm³)^{0.5} or less, and the glass transition temperatures were near -115°C. The elastic modulus at 25°C was 0.034 MPa for PDMS_h15, 3.0 MPa for PDMS_PDE and PDMS_Ph_DIPE, and 0.04 MPa for PDMS_d8. The elastic modulus at -96°C was in the range of 5 MPa or more and 45 MPa or less.

**[Table 4]**

| | **PDMS_h15** | **PDMS_DIPE** | **PDMS_Ph_DIPE** | **PDMS_d8** |
|---|---|---|---|---|
| **Pressure (kPa)** | **20.4** | **15.3** | **14.3** | **20.9** |
| **CO₂ adsorption amount (wt%)** | **3.1** | **3.8** | **3.0** | **11.5** |

As shown in Table 4, only PDMS_d8 has a CO₂ adsorption amount exceeding 10 wt% at -96°C. Only PDMS_d8 can reduce the partial pressure of CO₂ to about 20 kPa.

The elastic modulus of PDMS_d8 is 9 MPa at -90°C and about 15 MPa at -96°C. That is, PDMS_d8 has an elastic modulus of 20 MPa or less and is still soft, so it can adsorb a lot of CO₂.

On the other hand, the PDMS rubber used in Example 1 has an elastic modulus of over 40 MPa at -96°C, resulting in a small amount of CO₂ adsorption. Even PDMS_DIPE and PDMS_Ph_DIPE, which are expected to have a high degree of crosslinking, have a small amount of CO₂ adsorption.

In addition, 15 g of hexane was added to PDMS_h15 during crosslinking, but crosslinking hardly progressed. PDMS_h15 is a substance closer to a liquid than a rubber. In fact, PDMS_h15 has an elastic modulus of 5 MPa at -96°C. Even in such cases, the amount of CO₂ adsorbed is small at low temperatures.

In summary, from the view-point of increasing the CO₂ adsorption efficiency, it is desirable for the CO₂ adsorbent of the present invention to have an elastic modulus of 40 MPa or less at the adsorption temperature. However, it is not an essential feature of the present invention that the CO₂ adsorbent have an elastic modulus of 40 MPa or less at the adsorption temperature.

### Industrial Applicability

As described above, the present invention provides a CO₂ adsorbent suitable for recovering CO2 from a mixed gas containing a high concentration of CO₂, as well as a CO₂ separation and recovery method using this adsorbent. CO₂ separation and recovery are crucial for reducing greenhouse gas emissions, and this invention contributes to the prevention of global warming.

The present invention reduces the energy costs required for CO₂ recovery, particularly lowering the cost of regenerating the adsorbent. Therefore, this invention significantly contributes to industrial development.

## Claims

1. A CO₂ adsorbent comprising rubber having a glass transition temperature of -150°C or more and -10°C or less, an SP value of 7 (cal/cm³) ^{0.5} or more and 10.5 (cal/cm³) ^{0.5} or less, and an elastic modulus at 25°C of 0.03 MPa or more and 5 MPa or less.

2. The CO₂ adsorbent according to claim 1, wherein the glass transition temperature of the rubber is -125°C or more and -20°C or less.

3. The CO₂ adsorbent according to claim 1 or 2, wherein the SP value of the rubber is 7.3 (cal/cm³) ^{0.5} or more and 7.6 (cal/cm³) ^{0.5} or less.

4. The CO₂ adsorbent according to any one of claims 1 to 3, wherein the elastic modulus of the rubber at 25°C is 0.1 MPa or more and 4.5 MPa or less.

5. The CO₂ adsorbent according to any one of claims 1 to 4, wherein the rubber is made of PDMS.

6. The CO₂ adsorbent according to any one of claims 1 to 5, wherein a thickness of the rubber is 0.1 mm or more and 5 mm or less.

7. The CO₂ adsorbent according to any one of claims 1 to 5, wherein the rubber is in a powder form with an equivalent spherical diameter of 0.002 mm or more and 0.1 mm or less.

8. A method for separating and recovering CO₂ from a mixed gas, comprising:
Bringing a mixed gas containing CO₂, under a pressure of 1 MPa to 10 MPa and at a subzero temperature, into contact with the rubber according to any one of claims 1 to 7; and
After bringing the mixed gas into contact with the rubber, isolating the rubber from the mixed gas, and then desorbing CO₂ from the rubber in an environment with a pressure lower than the pressure at which the mixed gas was brought into contact with the rubber, and within the range of 0.1 MPa to 5 MPa.
